# FASCICULE DE BREVET EUROPEEN

(11) **EP 1 759 618 B1**
(45) Date de publication et mention de la délivrance du brevet: **20.08.2008**
(21) Numéro de dépôt: 06356099.9
(22) Date de dépôt: 03.08.2006
(51) Int. Cl.: A47J 31/46

(54) **Machine à café comportant un bec verseur perfectionné**
Kaffeemaschine mit verbesserter Ausgießdüse
Coffee machine with improved dispensing spout

(30) Priorité: 31.08.2005 FR 0508924
(43) Date de publication de la demande: 07.03.2007
(73) Titulaire: SEB SA, 69130 Ecully (FR)
(72) Inventeur: Mih, Séverine, 72600 Mamers (FR)
(74) Mandataire: Kiehl, Hubert

(56) Documents cités:
- WO-A-03/105645

## Description

La présente invention est relative à une machine à café du type comportant un réservoir d'eau, une chaudière pour chauffer l'eau en provenance du réservoir avant son arrivée dans une chambre d'infusion contenant de la mouture de café et un orifice de diffusion pour évacuer l'infusion obtenue vers un récipient collecteur.

Les orifices d'évacuation, ou becs de sortie, des machines à café sont constitués généralement par un conduit central communiquant avec le récipient situé en dessous, ou également par deux canaux ou voies de distribution aptes à amener l'infusion à la hauteur du récipient collecteur.

Le document FR 2 068 243 décrit un bec verseur à deux voies pour une machine à café du type espresso comportant une conduite centrale vissée à la sortie d'une coupelle porte-filtre et prolongée par deux larges cuvettes en V aptes à conduire le café espresso vers deux tasses en dessous. Une vis à pointe en forme de coin est montée sur la ligne d'embranchement des deux cuvettes et est amenée à pénétrer frontalement au centre du jet incident qu'elle divise ensuite en deux jets latéraux ayant un faible angle entre eux. Les jets latéraux sont redirigés par les parois verticales de chaque cuvette pour prendre la direction d'écoulement de l'axe longitudinal de la cuvette, faisant un angle droit avec le jet incident sortant de la conduite centrale de la coupelle porte-filtre. Dans une telle configuration, le jet latéral heurte les parois verticales des cuvettes et de ce fait subit des turbulences et des phénomènes d'accélération latérale pouvant parfois déborder et provoquer des éclaboussures ou projections de gouttelettes à côté du bec verseur.

Une solution a été présentée dans le document FR 2 513 106 où le conduit d'évacuation présente, à distance du carter de la machine à café, un tube de descente vertical coudé vers le bas dont le tronçon terminal inférieur présente une section de passage de contour fermé, bien calibrée. Notamment, le diamètre de cette section de passage doit être compris entre 3 et 5 mm. Un tel bec de sortie assure, certes, une bonne canalisation de l'infusion sans débordements latéraux, les gouttes de café restant en contact avec la paroi intérieure du bec de sortie, mais au prix d'une faible section de passage de l'infusion. Or, plus la section de passage d'un tel bec de sortie est étroite, plus elle est soumise à l'encrassement et à l'entartrage, nécessitant donc des opérations de nettoyage répétées.

Par ailleurs, une des exigences des machines à café espresso actuelles est de produire de la mousse ou crème de café qui doit être fine et persistante. Or, il a été constaté que, lorsqu'une telle machine est équipée de tubulures de sortie cylindriques de section d'écoulement fermée et étroite sur une partie importante de leur hauteur, la mousse colle aux parois et ne descend pas assez rapidement dans les tubulures. A des valeurs importantes du débit d'infusion de café, la mousse a même tendance à remonter à l'intérieur du bec verseur et à ralentir l'écoulement du café, voire à s'accumuler en la partie supérieure de ce dernier, débordant alors à l'intérieur de la machine ou sur le plan de travail.

Le document WO-A-03/10545 décrit un bec verseur comportant une parois terminale formant une section de passage de l'infusion à contour ouvert.

Le but de la présente invention est de remédier à ces inconvénients et de proposer une machine à café, notamment du type espresso, comportant un bec verseur apte à canaliser l'infusion obtenue vers au moins un récipient collecteur situé en dessous, de manière à permettre un écoulement rapide, mais continu et régulier, sans turbulences, de l'infusion et de la mousse produites vers le récipient collecteur.

Un autre but de l'invention est de proposer une machine à café, notamment du type espresso, apte à confectionner un café avec une couche de mousse fine et persistante pouvant s'écouler rapidement et directement dans un récipient collecteur inférieur, sans salir le support de réception du récipient ou le plan de travail.

Un autre but de l'invention est de proposer une machine à café comportant un bec verseur ou une sortie de café de construction simplifiée, pouvant être facilement nettoyé, tout en la réalisant de manière plus économique.

Ces buts sont atteints avec une machine à café, notamment du type espresso, comportant, à l'intérieur d'un boîtier, un réservoir d'eau froide communiquant avec une chaudière apte à envoyer de l'eau chaude à l'intérieur d'une chambre d'infusion contenant de la mouture de café, la chambre d'infusion étant en communication de fluide avec un conduit d'écoulement prolongé par un bec verseur, du fait que ledit bec verseur comporte une paroi terminale formant une section de passage de l'infusion à contour ouvert, dont la partie supérieure arrière est agencée tangentiellement à la surface du jet d'infusion qui s'écoule sur ladite paroi terminale jusqu'en sa partie inférieure arrivant à la hauteur d'un récipient collecteur.

L'infusion de café, contenant du café et de la mousse, est donc obtenue dans la chambre d'infusion suite au passage de l'eau chaude à travers la mouture de café et éventuellement à travers un dispositif moussant. L'infusion sortant de la chambre d'infusion passe dans un conduit d'évacuation communiquant avec un bec verseur qui l'oriente vers un récipient collecteur situé en dessous.

Selon l'invention, le bec verseur comprend une paroi terminale dont la partie supérieure arrière est agencée tangentiellement à la surface du jet incident d'infusion de café, en étant donc sensiblement parallèle à la direction d'écoulement de ce dernier. Le jet d'infusion ruisselle ainsi le long de la paroi terminale du bec verseur, derrière la paroi. Une telle paroi, de surface plane ou gauche, forme une section de passage de l'infusion à contour ouvert, l'ouverture étant alors orientée vers l'arrière de la machine. En effet, il a été observé lors des tests effectués qu'en raison des phénomènes de bonne mouillabilité de l'infusion de café au contact de la surface interne du bec verseur, l'infusion de café s'écoule rapidement le long de la paroi terminale du bec verseur en suivant l'orientation donnée par cette dernière, sans s'y attacher. Par ailleurs, du fait que la section de passage de l'infusion ne présente plus de contour fermé, les bulles de mousse de café ne s'agglomèrent plus à l'entrée du bec verseur, mais elles se laissent emporter par le jet d'infusion dans son cheminement vers le bas.

De surcroît, il a été constaté lors des tests effectués que les molécules d'air situées à la périphérie proche à l'extérieur de la paroi terminale du bec verseur étaient plus facilement entraînées par le flux d'infusion lors de son écoulement rapide le long de la paroi, ce qui augmentait la quantité de mousse obtenue dans le récipient collecteur.

Cette analyse a permis alors de réaliser un bec verseur selon l'invention qui est ouvert à l'arrière et dont la géométrie, le type de matériau et l'état de la surface de sa paroi terminale permettent un ruissellement de l'infusion le long de ses parois, sans décollement de gouttelettes et sans débordement latéral du café, pour un débit d'écoulement de l'infusion de café spécifique à ce type de machines, notamment compris entre 15 et 70 l/h. Un autre paramètre à prendre en compte est la vitesse d'écoulement du jet d'infusion, de préférence comprise entre 2 et 10 m/s.

Par partie arrière de la paroi, on comprend une partie orientée vers l'arrière de la machine ou située à l'opposé de ce que voit normalement un utilisateur qui regarde en face la machine du côté où se trouve la sortie de café (ou celui où se trouve généralement le panneau de commande de la machine). Ainsi, une ouverture du bec verseur orientée vers l'arrière de la machine est normalement invisible pour l'utilisateur. Un tel bec verseur ouvert à l'arrière est d'un entretien très facile, l'ouverture restant toutefois invisible pour l'utilisateur pour des raisons esthétiques.

Le bec verseur de l'invention assure donc un bon guidage et un écoulement rapide derrière la paroi, d'un flux laminaire d'infusion de café, en évitant les débordements ou les éclaboussures de café, ayant un même effet visuel qu'un conduit tubulaire à section de passage de contour fermé, mais assurant un meilleur écoulement du café dans le récipient collecteur placé en dessous.

De préférence, ladite paroi terminale présente une zone oblique inclinée vers l'avant.

Par zone oblique inclinée vers l'avant de la paroi on comprend, en d'autres termes, qu'elle fait un angle vertical négatif par rapport à un plan vertical passant par son extrémité. Dans une telle configuration, la paroi terminale du bec verseur avance vers l'utilisateur, laissant un dégagement pour un récipient collecteur de boisson placé en dessous.

Le flux d'infusion en provenance du conduit d'écoulement se déplace alors sur la paroi terminale, mais derrière la paroi, sans avoir de support matériel en dessous. Ce phénomène surprenant peut être expliqué sur la base de l'effet Coanda, le jet d'infusion sortant par le conduit d'écoulement ayant tendance à épouser intimement le contour extérieur de la paroi, même si cette dernière est inclinée. L'écoulement du liquide sur une telle paroi oblique dépend de quelques paramètres importants, notamment la vitesse d'écoulement du jet, l'intensité de son débit et le profil de la paroi.

Des phénomènes de tension superficielle à l'interface paroi terminale et jet d'infusion sont également à prendre en compte, notamment la force d'adhésion à l'interface liquide/solide, dirigée vers la paroi et permettant aux particules de liquide d'infusion d'adhérer à la paroi contre la force verticale de la gravité. En effet, la résultante de ces forces est dirigée le long de la paroi et permet au liquide d'infusion de glisser vers l'avant, selon l'orientation de la paroi.

Un tel bec verseur ayant une forme de toboggan inversé assure ainsi un écoulement laminaire de l'infusion le long de la paroi.

Avantageusement, la zone oblique présente un angle d'inclinaison inférieur à 75°.

Cet angle limite a été vérifié lors des tests effectués en faisant circuler un jet d'infusion de café le long d'une paroi lisse, sans angle vif de raccordement avec la ou les zones adjacentes du profil de la paroi. Au-delà de cet angle, pour les valeurs de débit et de vitesse d'écoulement spécifiques à une machine à café, l'écoulement laminaire est perturbé et le jet commence à goutter verticalement.

De préférence, la zone oblique de la paroi terminale est raccordée par une première zone coudée à la partie supérieure du bec verseur et par une deuxième zone coudée à une zone rectiligne située à l'extrémité inférieure du bec verseur.

Ceci permet de raccorder la partie oblique aux tronçons voisins par des zones coudées, sans angle vif, présentant des rayons de courbure qui assurent ainsi un meilleur écoulement en régime laminaire du flux d'infusion le long de la paroi terminale du bec verseur.

Avantageusement, le bec verseur comprend, en amont de la paroi terminale, une tubulure verticale entourant le conduit d'écoulement de l'infusion en provenance de la chambre d'infusion.

La tubulure verticale assure le lien entre le conduit d'écoulement et la paroi terminale du bec verseur en lui transférant le jet d'infusion incident.

De préférence, la tubulure verticale est raccordée à la paroi terminale par une zone en entonnoir.

Une telle zone en entonnoir assure le passage de l'infusion depuis la tubulure verticale de plus grande ouverture jusqu'à la partie supérieure arrière de la paroi terminale du bec verseur ayant des dimensions plus faibles.

Avantageusement, la tubulure verticale comporte, à sa base, un espace central communiquant par deux passages latéraux avec deux buses de sortie.

Une telle tubulure verticale commune assure à la fois le transfert de l'infusion depuis la chambre d'infusion via le conduit d'écoulement, ainsi que sa distribution, via deux buses de sortie, dans deux récipients collecteurs disposés côte à côte.

De préférence, les passages latéraux sont délimités par les parois inclinées du corps de la tubulure verticale.

Ainsi, les parois inclinées du corps de la tubulure verticale définissent des passages rétrécis, en V, de l'infusion de café, tel que vu en une coupe longitudinale verticale. Le jet d'infusion passant par de tels passages est alors bien orienté et est conduit en un jet laminaire vers chacune des buses de sortie, évitant ainsi la formation de turbulences à l'intérieur de la tubulure lors du fractionnement du jet incident.

Avantageusement, chaque passage latéral débouche dans la zone en entonnoir d'une buse de sortie ayant une même orientation que le fond du passage latéral.

La zone en entonnoir, se trouvant dans le prolongement du passage latéral d'infusion, est donc orientée selon la direction d'écoulement du jet d'infusion.

De préférence, la paroi terminale du bec verseur présente une section transversale en forme de U.

L'infusion de café en provenance de la chambre d'infusion est généralement orientée par le conduit d'écoulement de manière à ce que le flux de liquide puisse s'écouler au centre du bec verseur. Une section ouverte en forme de U ou de C permet donc au flux de liquide de s'écouler au centre, les parois latérales donnant une meilleure apparence de tube fermé.

L'invention sera mieux comprise à l'étude des modes de réalisation pris à titre nullement limitatif et illustrés dans les figures annexées dans lesquelles :
- la figure 1 est une vue en perspective d'une machine à café comportant un bec verseur selon la présente invention;
- la figure 2a est une vue frontale d'un bec verseur selon l'invention;
- la figure 2b est une vue de dessus du bec verseur de la figure 2a;
- la figure 2c est une vue de côté du bec verseur de la figure 2a;
- la figure 3a est une vue arrière d'un ensemble bec verseur et conduit d'écoulement de l'infusion;
- la figure 3b est une vue en coupe selon la ligne A-A de la figure 3a.

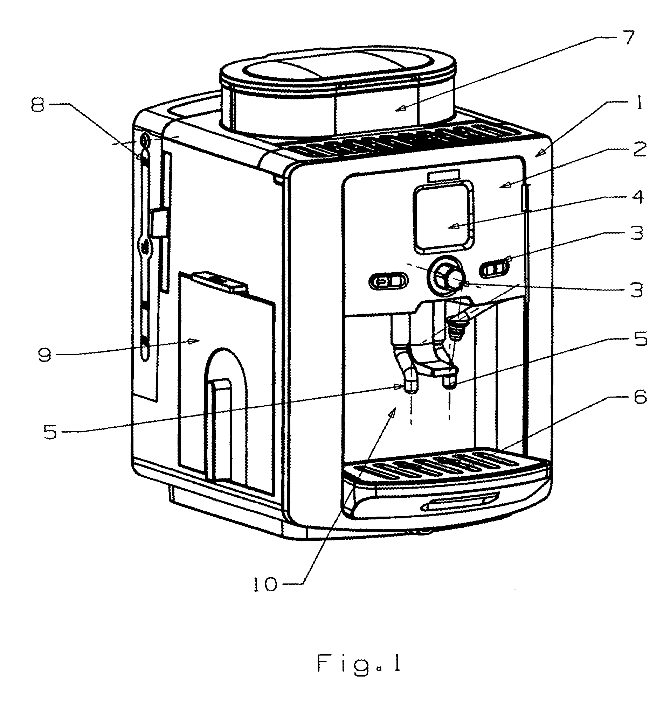

La machine à café de l'invention est apte à confectionner un café espresso et, tel que représenté à la figure 1, elle comprend un boîtier 1 de forme générale parallélépipédique qui renferme les principaux éléments fonctionnels de la machine. Le boîtier 1 présente une façade comprenant un panneau de commande 2 constitué d'une série de boutons 3 agissant sur le circuit électronique de contrôle de la machine et d'un afficheur 4. La boisson confectionnée par la machine s'écoule par deux buses identiques de sortie 5 d'un bec verseur 10 dans une tasse (non représentée) placée sur un support 6. Un réservoir de grains de café ou de mouture de café 7 est disposé en partie supérieure du boîtier 1 et un réservoir d'eau 8 en sa partie arrière. Sur l'un des côtés latéraux du boîtier est agencé un bac à mouture 9 destiné à recevoir les galettes de mouture usagées en provenance de la chambre d'infusion de la machine.

A l'intérieur du boîtier 1 est disposé un groupe d'infusion comportant une chambre d'infusion en forme de cuve cylindrique apte à recevoir une certaine quantité de café moulu au-dessus d'une paroi inférieure formant filtre pour la mouture. La chambre d'infusion est montée fixe au-dessus d'un bloc thermique, d'axe vertical, dont elle constitue le prolongement. Le bloc thermique renferme un circuit d'eau et un élément chauffant électrique et assure l'alimentation en eau chaude de la chambre d'infusion. La chambre d'infusion reçoit par ailleurs un piston presseur qui coulisse verticalement et de manière étanche dans la chambre pour compacter la mouture. Les éléments constitutifs du groupe d'infusion ne sont pas représentés sur les dessins, mais peuvent être réalisés selon la description du document WO 99/12456.

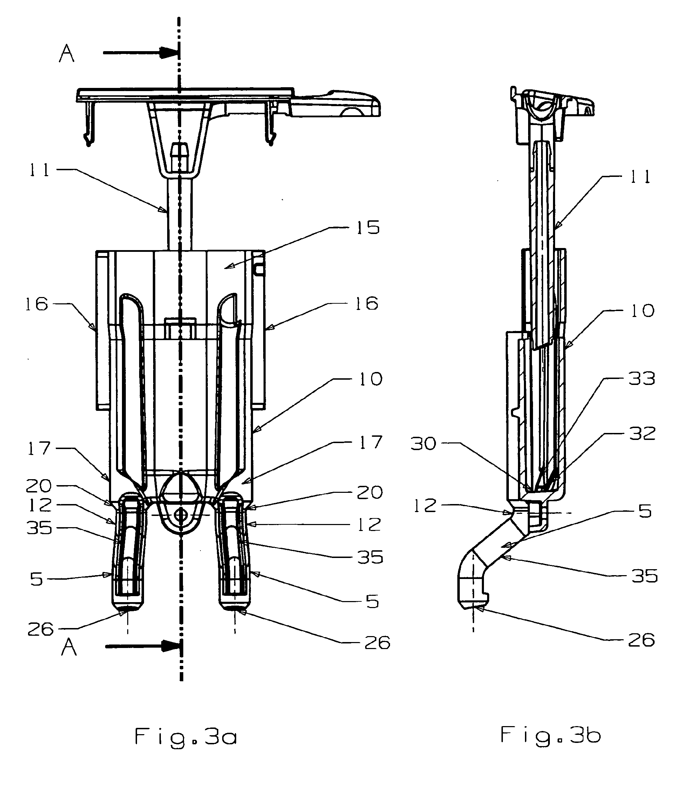

L'eau chaude en provenance du bloc thermique est envoyée à travers la mouture dans la chambre d'infusion et la boisson infusée est ensuite évacuée au travers du piston presseur, via un canal interne de ce dernier prolongé par un conduit d'écoulement 11 (visible aux figures 3a et 3b) vers le bec verseur 10 muni des deux buses de sortie 5 qui orientent la boisson vers l'extérieur où elle est recueillie dans une tasse.

Le bec verseur 10 comporte un corps 14 creux, de forme allongée présentant, en partie supérieure, une tubulure verticale 15 réalisée plus particulièrement sous forme de deux cylindres 17 raccordés entre eux par une paroi périphérique 18 recourbée. La tubulure verticale 15 se prolonge vers le bas par deux buses de sortie 5 qui sont agencées parallèlement l'une à l'autre. Le bec verseur 10 comporte par ailleurs, de part et d'autre de la tubulure 15, deux ailettes 16 de montage au boîtier de la machine; ces ailettes permettent à l'utilisateur de faire coulisser verticalement le bec verseur 10 et donc d'ajuster la distance entre les buses de sortie 5 et le support 6.

Chacune des deux buses de sortie 5 est raccordée à un cylindre 17 supérieur par une zone en entonnoir 20 prolongée vers le bas par une première zone coudée 21, prolongée à son tour par une zone oblique 22, puis par une deuxième zone coudée 24 suivie d'une zone rectiligne 25 s'étendant en direction d'une extrémité de sortie 26. Dans l'exemple représenté, la zone oblique 22 fait un angle de 45° par rapport à la verticale. Les zones coudées 21 et 24 assurent le raccordement en arc de cercle entre les zones voisines de la buse.

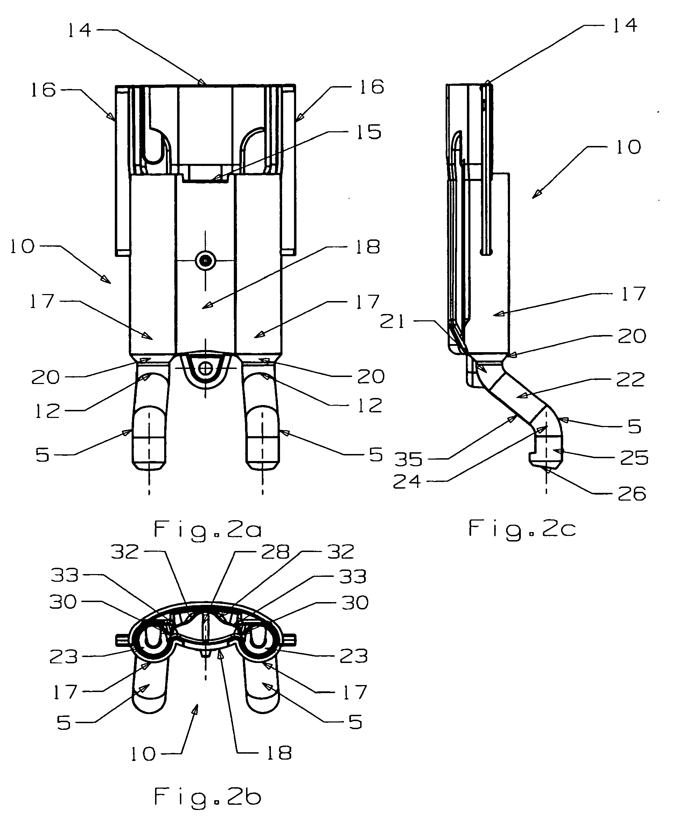

Tel que mieux visible aux figures 3a et 3b, la tubulure verticale 15 reçoit en sa partie centrale, derrière la paroi périphérique 18, le conduit d'écoulement 11 par lequel arrive l'infusion de café en provenance de la chambre d'infusion de la machine. Un espace central 28 (figure 2b), qui regarde l'extrémité de sortie du conduit d'écoulement 11, est ménagé à l'intérieur de la tubulure 15. L'espace central 28 communique par deux passages latéraux 30 situés en partie inférieure de la tubulure 15, avec chacune des zones en entonnoir 20 des buses 5. La géométrie des parois internes de la tubulure 15 autour de l'espace central 28 est réalisée de manière à définir des espaces d'écoulement en entonnoir au voisinage des passages latéraux 30. Ainsi, tel que mieux visible à la figure 3b, le passage 30 s'ouvre au bout d'un couloir vertical en V défini par une paroi interne centrale 32 et une paroi interne latérale 33.

Avantageusement selon l'invention et tel que mieux visible dans la réalisation représentée à la figure 3a, chacune des deux buses 5 est réalisée sous forme d'une paroi terminale 12 en demi-cercle. Plus particulièrement, chaque buse 5 a une forme cylindrique mais est ouverte à l'arrière par une fente 35 qui s'étend sur toute sa longueur, depuis la zone en entonnoir 20 et jusqu'à l'extrémité de sortie 26. Notamment la zone en entonnoir 20 présente une forme en demi-cercle 23 (figure 2b) qui suit le contour de la surface extérieure de la buse 5 et présente à l'arrière, au-delà du demi-cercle 23, un découpage ayant une même largeur que la fente 35. Chaque buse de sortie 5, notamment sa surface arrière, présente une surface lisse et un profil doux, ce qui permet un meilleur écoulement de l'infusion qui suit alors de très près le profil incurvé de cette dernière. Le rayon de raccordement entre les zones ayant des inclinaisons différentes doit, de préférence, être supérieur à 9 mm.

Le bec verseur 10 est réalisé en une seule pièce en une matière plastique, par exemple l'ABS.

En fonctionnement, l'infusion de café arrive par le conduit découlement 11, puis tombe à l'intérieur de l'espace central 28 d'où, guidée par les parois internes 32,33 situées à droite et respectivement à gauche de l'espace central 28, emprunte les passages latéraux 30 la guidant vers les buses 5. Les passages latéraux 30 se situant dans le prolongement de la zone en entonnoir 20 de chaque buse 5, l'infusion s'écoule tangentiellement à la partie en demi-cercle 23 formant alors un entonnoir tronqué qui l'oriente le long de la surface arrière de la buse 5. L'infusion s'écoule alors en suivant la forme en toboggan inversé de la buse de sortie 5, par effet Coanda, le jet d'infusion étant par ailleurs soumis à la force d'adhésion entre le liquide et la paroi de la buse 5, normale à la paroi et dirigée vers cette dernière, et la force verticale de gravité dirigée vers le bas.

En effet, pour que le jet d'infusion puisse bien adhérer à la paroi de la buse de sortie, ou afin qu'il mouille bien cette paroi, le choix du matériau et l'état de la surface de la paroi sont des facteurs très importants. Ainsi, une buse de sortie 5 réalisée en une matière plastique, par exemple l'ABS, chromée est préférée. Une buse réalisée en un acier inoxydable ayant un polissage type miroir pourrait également être envisagée. L'état de surface de la buse à l'interface avec le jet d'infusion doit présenter une rugosité très fine, de préférence une rugosité Rₐ comprise entre 0.06 et 0.2, afin d'assurer une force d'adhésion importante entre le liquide et la paroi.

La force d'adhésion étant fonction de la tension superficielle du liquide adhérant à la paroi et cette dernière dépendant de la largeur de la paroi de la buse, la largeur de la paroi doit être au moins égale à 2 mm. A titre d'exemple, une buse 5 telle que représentée sur les figures présente une section en U ayant un diamètre extérieur de 9mm, un diamètre intérieur de 4mm, la fente 35 présentant une largeur également de 4mm.

La buse 5 étant ouverte, elle conduit plus rapidement et uniformément l'infusion de café chargée en mousse vers l'extrémité 26 de la buse 5. Ceci est effectué de manière non visible par l'utilisateur, la fente 35 étant complètement cachée par la partie frontale de la buse.

D'autres variantes et modes de réalisation peuvent être envisagés sans sortir du cadre de ces revendications.

Ainsi, les buses de sortie du bec verseur peuvent être inclinées latéralement au lieu d'être inclinées vers l'avant ou avoir une inclinaison latérale en plus de leur inclinaison vers l'avant.

Dans une variante, la paroi terminale 12 du bec verseur 10 est une lame fine verticale.

## Revendications

1. Machine à café, notamment du type espresso, comportant, à l'intérieur d'un boîtier (1), un réservoir d'eau froide communiquant avec une chaudière apte à envoyer de l'eau chaude à l'intérieur d'une chambre d'infusion contenant de la mouture de café, la chambre d'infusion étant en communication de fluide avec un conduit d'écoulement (11) prolongé par un bec verseur (10), ledit bec verseur (10) comportent une paroi terminale (12) formant une section de passage de l'infusion à contour ouvert, **caracterisée en ce que** la partie supérieure arrière dudit bec verseur (10) est agencée tangentiellement à la surface du jet d'infusion qui s'écoule sur ladite paroi terminale (12) jusqu'en sa partie inférieure arrivant à la hauteur d'un récipient collecteur.

2. Machine à café selon la revendication 1, **caractérisée en ce que** la paroi terminale (12) présente une zone oblique (22) inclinée vers l'avant.

3. Machine à café selon la revendication 2, **caractérisée en ce que** la zone oblique (22) présente un angle d'inclinaison inférieur à 75°.

4. Machine à café selon l'une des revendications 2 ou 3, **caractérisée en ce que** la zone oblique (22) de la paroi terminale (12) est raccordée par une première zone coudée (21) à la partie supérieure du bec verseur (10) et par une deuxième zone coudée (24) à une zone rectiligne (25) située à l'extrémité (26) inférieure du bec verseur.

5. Machine à café selon l'une des revendications précédentes, **caractérisée en ce que** le bec verseur (10) comprend, en amont de la paroi terminale (12), une tubulure verticale (15) entourant le conduit d'écoulement (11) de l'infusion en provenance de la chambre d'infusion.

6. Machine à café selon la revendication 5, **caractérisée en ce que** la tubulure verticale (15) est raccordée à la paroi terminale (12) par une zone en entonnoir (20).

7. Machine à café selon l'une des revendications 5 ou 6, **caractérisée en ce que** la tubulure verticale (15) comporte, à sa base, un espace central (28) communiquant par deux passages latéraux (30) avec deux buses de sortie (5).

8. Machine à café selon la revendication 7, **caractérisée en ce que** les passages latéraux (30) sont délimités par les parois inclinées du corps de la tubulure verticale (15).

9. Machine à café selon l'une des revendications 7 ou 8 , **caractérisée en ce que** chaque passage latéral (30) débouche dans la zone en entonnoir (20) d'une buse de sortie (5) ayant une même orientation que le fond du passage latéral (30).

10. Machine à café selon l'une des revendications précédentes, **caractérisée en ce que** la paroi terminale (12) du bec verseur (5) présente une section transversale en forme de U.

## Claims

1. A coffee machine, in particular of the espresso type, comprising, inside a housing (1), a cold water reservoir communicating with a boiler suitable for sending hot water into a brewing chamber containing coffee grinds, the brewing chamber being in fluid communication with an outflow duct (11) extended by a spout (10), said spout (10) having an end wall (12) forming a flow section having an open outline for passing the brew, said coffee machine being **characterized in that** the rear top portion of said spout (10) is arranged tangentially to the surface of the jet of brew that flows along said end wall (12) to its bottom portion where it arrives at the height of a collecting receptacle.

2. A coffee machine according to claim 1, **characterized in that** the end wall (12) has a slanting zone (22) that is inclined forwards.

3. A coffee machine according to claim 2, **characterized in that** the slanting zone (22) presents an angle of inclination less than 75°.

4. A coffee machine according to claim 2 or claim 3, **characterized in that** the slanting zone (22) of the end wall (12) is connected via a first bend zone (21) to the top portion of the spout (10) and via a second bend zone (24) to a rectilinear zone (25) situated at the bottom end (26) of the spout.

5. A coffee machine according to any preceding claim, **characterized in that**, upstream from the end wall (12), the spout (10) is provided with a vertical outlet pipe (15) surrounding the outflow duct (11) via which the brew flows from the brewing chamber.

6. A coffee machine according to claim 5, **characterized in that** the vertical outlet pipe (15) is connected to the end wall (12) via a funnel-shaped zone (20).

7. A coffee machine according to claim 5 or claim 6, **characterized in that**, at its base, the vertical outlet pipe (15) has a central space (28) communicating via two side passages (30) with two outlet nozzles (5).

8. A coffee machine according to claim 7, **characterized in that** the side passages (30) are defined by the inclined walls of the body of the vertical outlet pipe (15).

9. A coffee machine according to claim 7 or claim 8, **characterized in that** each side passage (30) opens out into the funnel-shaped zone (20) of an outlet nozzle (5) extending in the same direction as the bottom of the side passage (30).

10. A coffee machine according to any preceding claim, **characterized in that** the end wall (12) of the spout (5) has a U-shaped cross-section.

## Patentansprüche

1. Kaffeemaschine, insbesondere Espresso-Kaffeemaschine, die in einem Gehäuse (1) einen Kaltwasserbehälter aufweist, der mit einem Kessel verbunden ist, der warmes Wasser in eine Aufgusskammer leiten kann, die Kaffeemahlgut enthält, wobei die Aufgusskammer mit einer Strömungsleitung (11) fluidisch verbunden ist, welche durch eine Tülle (10) verlängert ist, wobei die Tülle (10) eine Endwand (12) aufweist, die einen Aufgussdurchlassquerschnitt mit offener Kontur bildet, **dadurch gekennzeichnet, dass** der obere hintere Teil der Tülle (10) tangential zur Fläche des Aufgussstrahls angeordnet ist, der an der Endwand (12) bis in ihren unteren Teil fließt, der sich auf Höhe eines Sammelbehälters erstreckt.

2. Kaffeemaschine nach Anspruch 1, **dadurch gekennzeichnet, dass** die Endwand (12) einen schrägen, nach vorne geneigten Bereich (22) aufweist.

3. Kaffeemaschine nach Anspruch 2, **dadurch gekennzeichnet, dass** der schräge Bereich (22) einen Neigungswinkel von weniger als 75° aufweist.

4. Kaffeemaschine nach einem der Ansprüche 2 und 3, **dadurch gekennzeichnet, dass** der schräge Bereich (22) der Endwand (12) über einen ersten abgewinkelten Bereich (21) mit dem oberen Teil der Tülle (10) und über einen zweiten abgewinkelten Bereich (24) mit einem gerade verlaufenden Bereich (25) verbunden ist, der sich am unteren Ende (26) der Tülle befindet.

5. Kaffeemaschine nach einem der vorhergehenden Ansprüche, **dadurch gekennzeichnet, dass** die Tülle (10) stromaufwärts der Endwand (12) einen senkrechten Stutzen (15) aufweist, der die Leitung (11) für das Strömen des Aufgusses aus der Aufgusskammer umschließt.

6. Kaffeemaschine nach Anspruch 5, **dadurch gekennzeichnet, dass** der senkrechte Stutzen (15) über einen trichterförmigen Bereich (20) mit der Endwand (12) verbunden ist.

7. Kaffeemaschine nach einem der Ansprüche 5 und 6, **dadurch gekennzeichnet, dass** der senkrechte Stutzen (15) an seiner Basis einen mittigen Raum (28) aufweist, der über zwei seitliche Durchgänge (30) mit zwei Auslassdüsen (5) verbunden ist.

8. Kaffeemaschine nach Anspruch 7, **dadurch gekennzeichnet, dass** die seitlichen Durchgänge (30) durch geneigte Wände des Körpers des senkrechten Stutzens (15) begrenzt sind.

9. Kaffeemaschine nach einem der Ansprüche 7 und 8, **dadurch gekennzeichnet, dass** jeder seitliche Durchgang (30) in den trichterförmigen Bereich (20) einer Auslassdüse (5) mündet, der die gleiche Ausrichtung hat wie der Boden des seitlichen Durchgangs (30).

10. Kaffeemaschine nach einem der vorhergehenden Ansprüche, **dadurch gekennzeichnet, dass** die Endwand (12) der Tülle (5) einen U-förmigen Querschnitt aufweist.
